# EUROPEAN PATENT SPECIFICATION

(11) **EP 1 685 781 B1**
(45) Date of publication and mention of the grant of the patent: **15.04.2009**
(21) Application number: 04789826.7
(22) Date of filing: 12.10.2004
(51) Int. Cl.: A47J 27/00, G05D 23/00, F24C 5/16

(54) **AN INTELLIGENT COOKING METHOD**
INTELLIGENTES GARVERFAHREN
PROCEDE DE CUISSON INTELLIGENT

(30) Priority: 17.10.2003 CN 200310111819
(43) Date of publication of application: 02.08.2006
(73) Proprietor: Liu, Xiaoyong, Shenzhen, Guangdong 518040 (CN)
(72) Inventor: Liu, Xiaoyong, Shenzhen, Guangdong 518040 (CN)
(74) Representative: Richardt, Markus Albert
(86) International application number: PCT/CN2004/001154
(87) International publication number: WO 2005/037033

(56) References cited:
- EP-A- 1 532 902
- CN-A- 1 081 866
- CN-A- 1 314 124
- CN-A- 1 364 436
- CN-Y- 2 448 232
- CN-Y- 2 493 122
- US-A- 5 050 490
- US-A- 5 525 781
- US-A- 5 881 632

## Description

### Field of the Invention

This invention relates to a cooking method. More particularly, this invention relates to an intelligent cooking method through programmable controlling the feeding of the cooking-material(s), the heating intensity and the cooking duration (also known as the heating duration) in an automatic or a semi-automatic cooking machine.

### Background of the Invention

Food is an important part of the human life and also a problem troubling the daily life of the human being. Cuisine, especially the Chinese cuisine, not only consumes time and labor, but also is dirty and tiring, with a lot of skills hard to master. In daily life people spend a lot of time and energy in cooking, but without any ideal effect. In recent years, many kinds of new cooking devices are developed, such as electric cooker, automatic pressure cooker, microwave oven, electronic oven, frying oven, automatic soup boiler, automatic soybean milk boiler, and automatic milk heater, etc. These types of cooking devices, as well as the methods used, have made great advancement for daily cooking. However, in general, they are only some appliances focused on providing a simple skill for cooking in certain aspect, and hardly touch the core contents of cooking, especially that of Chinese cooking, such as various basic cooking methods, the cooking duration control, and the fundamental actions of various cuisines. Therefore, these devices can not really liberate people from the difficulties and the suffering of cooking. To solve the problem of cooking, it is necessary to replace the manual actions with an automatic or a semi-automatic cooking machine, on which artificial intelligent cooking methods are used to perform in an automatic manner or in a semi-automatic manner various basic cooking skills, such as stir-frying, quick-frying, frying in low temperature, frying, cooking with no juice, stewing, braising, quick-boiling, boiling, steaming, and light-frying, and to realize intelligently an automatic or a semi-automatic cooking duration control and corresponding cooking actions according to cooking style, material selection and preparation, material weight, cooking devices, and the surroundings of cooking, etc. If such a cooking method can be provided, people will enjoy delicious cooked dishes as if they were cooked by professional chef.

The Chinese patent application No. 00108292.2 discloses an automatic electrical heating method for cooking, which includes: providing control data to evaluate of settings of various foods and cooked extents and food internal temperature; selecting one from many foods; selecting one from many cooked extent settings; determining the cooked internal temperature according to said control data; and displaying a prompt when the internal temperature of the food reaches the cooked internal temperature. Actually, the cooking method disclosed in this application is only a baking method, especially for baking meats. Therefore, the automatic feeding of cooking-material was not considered in this method, neither the adjustment of heating intensity during cooking. For the Chinese dishes the control of the heating intensity determines the taste of the dishes, in rather great extent.

The Chinese patent application No. 01107447.7 discloses an automatic intelligent cooking method, including the following steps: determining a dish code corresponding to a dish; setting a cooking program in data base of specialist cooking; reading the dish code by an input device; putting the required material into a feeding device; and running the corresponding cooking program by a central controller according to the read dish code. Though it disclosed that a cooking program can be selected by entering the dish code, it did not teach how to feed cooking-material through opening a package of cooking-material. Its dish code is only for loading the corresponding cooking program and cooking-material needs to be prepared and put manually into its feeding device. In addition, the method in CN 01107447.7 does not include the steps for measuring the state of cooking duration as well as automatically adjusting in real-time for the heating power or the combustion intensity, which are very critical in the Chinese cuisine.

Some cooking devices, such as microwave oven, on the market may have several dozens of built-in cooking programs, announcing that it can cook dishes of several major cooking skills. First, heating by microwave may be not suitable for Chinese cuisine, as well as for many western style dishes. Second, there is a significant drawback in performing fundamental cooking actions in such an oven. For example it could not be used for feeding automatically cooking-material in a stepwise manner, nor could it be used to perform automatically turnover of the cooking-material. More importantly, the control of cooking duration varies significantly in various dishes with different tastes and different cooking-material used in more than thousands ways, which can never be covered and met with several dozens of built-in cooking programs. Although the cooking method disclosed in Chinese application No. 01107447.7 provides a cooking program for each kind of dishes it still can not satisfy requirements for real cooking, because even the same kind of dishes may have different requirements for controlling cooking duration and cooking actions. For instance, for Chinese dish of "fish-flavored shredded pork", the differences between the material selection (e.g., loins and ham), the differences between the material preparation (e.g., horizontal cut or vertical cut, large piece or small piece, etc.), and the differences between the material amount, etc. will certainly require different control for cooking duration and cooking actions to reach a satisfied taste. Thus the same cooking program named "fish-flavored shredded pork" may obtain totally different results. Therefore, one kind of dishes may need several cooking programs, at least several subprograms, which should include controls for different cooking duration and for different cooking actions. Even so, it still should be included in a cooking method the factors such as the different surroundings (e.g., heat will be distributed into the surroundings quickly in winter and s and slowly in summer), the different initial state of cooking-materials (e.g., whether cooking-material is cooked directly after buying from the market or taking out from the refrigerator), and the feedback the data about the surroundings, heat sources, cooking devices, heat transfer medium, the initial state of cooking-materials and/or the real-tinle state of cooking duration in order to adjust automatically heating intensity as well as in order to control automatically and dynamically heating duration. Correspondingly, such factors shall be included in a cooking program.

EP 1532902 does disclose an intelligent cooking method performed in a cooking machine, which includes providing or inputting data about cooking material, loading a cooking program, executing the loaded cooking program, feeding the cooking material and controlling automatically the heating intensity.

US 5,525,781 does disclose a steering apparatus including a steerer, wherein the steerer includes a mounting, an attachment and termination end, a utensil defining a utensil surface and a utensil contacting member mounted onto the termination end of the steerer.

US 5,881 632 discloses a computerized cooker in which numerous food items can be sequentially entered into various cooking pots and liquid ingredients can be introduced as well.

### Description of the Invention

The purpose of this invention is to provide an intelligent cooking method used in an automatic or a semi-automatic cooking machine to perform many kinds of cooking skills. Such a cooking method can control cooking duration and perform basic cooking actions, such as adjusting heating intensity, feeding cooking-material, turning-over and stirring, taking out, and re-feeding, etc., in an automatic manner or in a semi-automatic manner according to the style of dishes, selected cooking-material and its preparation, the amount of cooking-material, the state of cooking-material, the heat sources, the selected heat transfer medium, the cooking machine used, the surroundings of cooking and/or the cooking effect required, such as taste, flavor, sense of quality, and cooked state, etc.

The above purpose of this invention can be reached through an intelligent cooking method which includes the following steps:
(1) Providing and/or inputting data or information about cooking-material(s) and/or about a cooking process itself;
(2) Loading a corresponding cooking program according to the data or information provided and/or input in step (1);
(3) Executing or running the cooking program loaded in step (2);
(3) Executing or running the cooking program loaded in step (2);
(4) Opening a package containing the cooking-material and feeding or putting the cooking-material into a pan and/or a container of the above cooking machine according to the instruction obtained after executing of the above cooking program; and
(5) Controlling automatically the heating intensity by adjusting the heating power or the combustion intensity of the above cooking machine according to the data set by the above cooking program and/or according to the data measured for the initial state and/or according to the data of cooking duration measured in real-time.

In the method mentioned above, it can further include a step of using one or more sensors provided in a cooking system to measure and collect data about the surroundings of cooking, the heat sources, the cooking machine and/or its containers, the selected heat transfer medium, the initial state of the cooking-material, and/or the real-time state of heating duration.

The steps mentioned above can be implemented for one times or more than one times, not necessarily in the above sequence, and can also be implemented at the same time.

In step (1), the data about the cooking-material and/or the data about a cooking process itself can be provided and/or input through reading (e.g., reading by scanning) the information on the package of cooking-material and/or through inputting the corresponding data about cooking-material and/or the data about a cooking process via radio communication, network or keyboard (buttons). The information on the package of cooking-material can only be an identification information, e.g., a two-dimensional bar code, and through this identification information the corresponding data or data package, such as a cooking program or cooking information, can be further loaded. Of course, the data about the cooking-material and/or the data about a cooking process itself can be provided and/or input in other ways. The identification information can include not only the identification information of the kind of dishes or the dish name, but also that of such factors as the types of cooking-material, preparation features of cooking-material, the amount of cooking-material, and the cooking effect desired, which will cause the difference in the control of cooking duration and in performing cooking actions. In this step, besides reading the identification information on the package of cooking-material by scanning, other supplementary data can also be input according to individual taste, favorite, and cooking requirements.

For instance, one embodiment of step (1) mentioned above can be like that: according to the kinds of cooking-material and the feeding requirements for a specific dish, pack all the cooking-materials, including the main material(s), the auxiliary material(s) and the flavoring in a package of cooking-materials, on which a two-dimensional bar code is printed. The consumer shall only need to buy such a package containing the cooking-materials for a specific dish and put the package into an automatic cooking machine, such as that described in Chinese patent application No. 03137938.9 (with the same inventor as that of the present invention), or other automatic/semi automatic cooker. The cooking machine will load a corresponding cooking program according to the two-dimensional bar code and perform cooking according to the cooking method of the present invention to get the specific dish of needed taste. In this way, the whole process from selection of cooking-materials to completion of the specific dish can be automatically realized in an industrial manner, and thus can save people from the heavy kitchen work. Of course, the operator or cooker can also prepare and pack cooking-materials in a package by himself and then perform cooking according to the method of the present invention. The cooking program can be edited by a cooker himself or obtained through other ways.

In step (2), the corresponding cooking program can be read from a memory medium, for instance, from the memory medium of the control system in a cooking machine and/or from an external memory medium, or downloaded from a network. Besides containing the commands related to the fundamental actions and time sequences for a specific dish set in accordance with cooking skills and/or experiences of a chef, the cooking program can contain commands for measuring the initial state and/or the cooking duration in real-time state, commands for automatically adjusting heating intensity, commands for automatically/semi-automatically controlling cooking duration and basic cooking actions, and/or command combination thereof, such as commands about heating time, speed for increasing or decreasing temperature, temperature maintaining, and starting/pausing/ending of heating, etc., based on such factors as the style of a specific dish, the selected cooking-materials, preparation features of the selected cooking-materials, the amount of the selected cooking-materials, the selected heat source, the selected cooking machine, the surroundings of cooking, the selected heat transfer medium, and/or the cooking effect desired.

In the method mentioned above, the sensor(s) for the measurement of the initial state and cooking duration can be one or several sensors installed at an automatic or a semi-automatic cooking machine, at its cooking container and/or at other related positions (e.g., an ambient thermal sensor can be placed outside the casing of a cooking machine, and a pressure/flow sensor can be placed at a fuel gas source). The sensor can be a thermal sensor, an optical sensor (e.g., sensors for measuring the absorbency, color, and image), a sensor for measuring chemical content, a sensor for measuring smell (e.g., an electronic nose) and/or a sensor for measuring mechanic data (e.g., sensors for measuring hardness and crispness and sensors for measuring the motion state of a mechanical device, etc.). The measured data about the initial state and the measured date about cooking duration include one or more selected from the group consisting of temperature, color, smell, image, chemical data, mechanical data and/or other data related to the cooking.

In step (4), the feeding of cooking-materials can be carried out through running a cooking program in the control system of an automatic or a semi-automatic cooking machine, with the feeding time determined by such factors as measured data about the initial state, measured data of cooking duration in real-time state, and/or time. The command issued by the control system of the cooking machine, can be either a command to directly or indirectly control the opening device of the feeding system of cooking-materials in the cooking machine to open the package of cooking-materials, or a command issued to a prompt device or an auxiliary device to let these devices prompt an operator or cooperate with an operator to operate the opening device of the feeding system of cooking-materials to open the package of cooking-material. The feeding can be done in one times or in several times, for instance, feeding cooking-material A first, cooking-material B second, and then cooking-material C when cooking-material B reaches a certain heating duration.

The material feeding with the feeding device of cooking-materials should depend on the package of cooking-materials. For example, for the package of cooking-materials without a sealing part and a packing part, feeding can be carried out by cutting the package of cooking-materials. For the package of cooking-materials with a sealing part and a packing part, feeding can be done by relative motion between the sealing part and the packing part, e.g., pushing, pulling or rolling the sealing part. In this kind of package of cooking-materials the packing part is used for placing the cooking-materials while the sealing part is used for sealing the packed cooking-materials.

Actually, according to the method of the present invention, besides the package of cooking-material(s) is used for feeding main cooking-material(s), an auxiliary feeding device can also be used for feeding cooking-material(s). For instance, an auxiliary feeding device such as a dosing box with valve and a liquid pump is used to feed solid and/or liquid seasonings in a quantitative manner. As another example, water, oil, and juice needed in a cooking process can be feed in a quantitative manner at preset temperature and amount with a storing/feeding device for water, oil and juice. The above feeding of cooking-materials, especially the auxiliary materials with the auxiliary feeding device, can be automatically implemented under the control of the control system in the cooking machine, can be manually implemented under manual control, or can be implemented under manual control with the prompt and/or cooperation of the cooking machine. Besides the above feeding method using the package of cooking-materials and the auxiliary feeding device, some cooking-materials can also be manually put into the pan and/or the container of the cooking machine. For example, materials which are too big to put into the package can be feed manually. Still as another example, a raw egg can be manually feed after breaking its shell. Such kind of manually auxiliary feeding can be done by an operator himself, or can be manually done under the prompt or cooperation of the cooking machine.

In step (5), the automatic control of the heating intensity can be realized according to the time settings in the cooking program, and/or can be realized through feeding back in real-time the measured data about the initial state and/or the measured data about the cooking duration in real-time state to the control system of the cooking machine, comparing them with the settings and/or the state data obtained from the cooking program loaded in step (2), and automatically adjusting the heating power and/or combustion intensity of the cooking machine.

The cooking method mentioned above can further include steps of turnover or stirring, taking out, and/or re-feeding of the cooking-materials. This kind of action such as turnover or stirring, taking out, and/or re-feeding of the cooking-materials can be realized by the turning-over system, the stirring system, the taking out system and/or the re-feeding device on an automatic or a semi-automatic cooking machine, which is done through running the cooking program mentioned above in the control system of the cooking machine, determining the action time according to the measured data about the initial state, the measured data about the cooking duration and/or the factor of time, etc., and issuing the corresponding command. The command issued by the control system of the cooking machine can be either a command to directly or indirectly control the action of the turning-over system or the stirring system, the taking out system, and/or the re-feeding device in the cooking machine, or a command issued to a prompt device or an auxiliary device to let these devices prompt an operator or cooperate with an operator to control the action of the turning-over system or the stirring system, the taking out system, and/or the re-feeding device. In an automatic or a semi-automatic cooking machine, the turning-over system or the stirring system, the taking out system, and/or the re-feeding device can be either independent to each other or formed one or two combined systems.

In fact, according to the method of the present invention, besides utilizing the turning-over system or the stirring system, the taking out system, and/or the re-feeding device mentioned above, it can also be assisted with some manual action such as turning-over, stirring, taking out, separating, and/or re-feeding. Such manually assisted action can be carried out either by an operator himself, or can be done under the prompt or cooperation of the cooking machine.

The cooking method mentioned above can further include measuring the motion state of the moving part(s) in an automatic or a semi-automatic cooking machine, e.g., measuring the position of the feeding system of cooking-materials. Then the control system will control automatically a driving device, a transmission device, and/or other moving device according to the measured physical variable of the motion state and/or its variance. The measurement of the motion state can be realized by either one or more sensors for measuring the variables of the motion state, or by other measuring devices, e.g., a measuring device equipped with a motor.

The measurement of the initial state and cooking duration is mainly to measure physical variables, chemical variables, and/or their variances of the surroundings of cooking, the selected heat source, the used cooking machine, the selected heat transfer medium, and/or the used cooking-materials, which can be done dynamically and in real-time. The measured data is transmitted to the control system for evaluating and controlling of the cooking duration correctly and timely. The selected heat transfer medium can be steam, water, oil, or other substances, which depends on the type of a specific dish. Of course the pan itself can transfer heat.

In the cooking method mentioned above, the heating intensity can be controlled by automatic adjustment of the heating power, the flow/pressure of fuel gas, and/or other controllable factors of the heating system. The heating system can be a system which produces heat from fuel gas, electricity, electromagnetism, microwave, light wave, infrared, and/or other heat sources. The heating system can be equipped with one or more heating devices according to the number of the pans and the requirement for adjusting the heating power. The automatic control of the heating intensity can be performed by an automatic adjusting device installed in the control system of an automatic or a semi-automatic cooking machine according to the commands from the cooking program, the data about physical variables, chemical variables and/or their variances for the initial state and/or cooking duration measured and fed back in real-time by the sensor(s), and/or factors of time, etc. Such an automatic adjusting device can be a driving/transmission device and/or an electrical/electromagnetic adjusting device which can output continuous or stepwise movement and/or adjustment. For instance an automatic adjusting device can adjust the heating power through adjusting automatically voltage/current/resistance, or an automatic adjusting device can have a combination of two or more, same or different, heat generating devices which adjusts the heating power through switching on/off some or all heat generating devices. As another example, a kind of controllable valve can be adopted to directly adjust, continuously or in steps, the flow or pressure of fuel gas according to the signal such as electrical signal provided by the control system.

Still as another example, it can be a kind of device with two or more gas passages, which can be open/close correspondingly. The gas flow of each passage can be same or different. The gas passages can be open by an electrical/ electromagnetic valve, e.g., a solenoid, or by a mechanical valve or other valves. The control system can control the open/close of each gas passages to form various combinations of gas flows, and produce two or more kinds of combustion intensity to realize an automatic, continuously or in steps, adjustment of the heating power and/or combustion intensity.

The control of cooking duration is one of the key factors determining the cooking process and the final result. The so called control of cooking duration can be divided into the control of the "fire" or "heating" and the control of the "time". The former is a control of the heating intensity, and the latter the control of the time. In the cooking method mentioned above, the control of the "fire" can be carried out by the automatic control of the heat intensity, based on the correct measurement and feedback of the cooking duration and the initial state for the selected heat transfer medium and cooking-material as mentioned above in real-time, and/or the adjustment of the heating power/combustion intensity. The control of the "time" can be carried out through controlling automatically the time of each cooking action by the control system in an automatic or a semi-automatic cooking machine according to said cooking program, the measured data about the initial state and/or cooking duration by the sensor(s), and/or preset time.

In the cooking method mentioned above, it can further include opening and/or closing a pan cover automatically. The pan cover can be installed on an automatic open/close device under the control of the control system which determines the time and degree for opening or closing according to the requirement of a cooking program, the data about heating duration, and the time.

In the cooking method mentioned above, it can further include the treatment of oil volatile to reduce the pollution and improve the cleanness of a kitchen. To treat oil volatile automatically, the whole body or the opening of the pan of an automatic or a semi-automatic cooking machine can be enclosed in a sealed or semi-sealed shell which can be transparent or opaque. The shell can be connected with a device for venting and/or treating oil volatile which performs action under the command from the control system.

In the cooking method mentioned above, it can further include cooling quickly the pan body and/or the cooking-materials in a direct or indirect way and thus accurately control the temperature and the heating duration. For example, the cooling can be done by air cooling (air blowing), water cooling (through cooling coil), and/or injecting water direct into the pan.

In the cooking method mentioned above, the identification information on the package of cooking-material(s) can be read with a bar-code scanner and/or other reading devices. The package can be a container with single or multiple chambers, consisting of the packing part and the sealing part. The cooking-material(s) is packed in the packing part and opened by the methods of rolling and pulling, and pushing and pulling, or other methods separating the packing part and the sealing part to have the material(s) in the package fallen, in one or several times, into the pan through the opening. The package can also only have the packing part and be opened through breaking the package (e.g., cutting, etc.).

In the cooking method mentioned above, it can further include a step of washing. This washing step can be done by cleansing and/or brushing with water.

In the cooking method mentioned above, the cooking-material(s) can be cooked in one time or in several times into the desired dish.

Compared with the cooking method in the art, the cooking method of the present invention can really realize completely automatic and high quality cooking. The only thing an operator or user has to do is to insert the package of cooking-materials, supplementary materials to be cooked and/or semi-finished products into the auto feeding system and start up the cooking machine. The scanner on the auto feeding system automatically recognizes the identification signal and transfers this identification information to the control system, and the control system loads the corresponding cooking program to control the sensor system to detect and transfer signal back to the control system. The control system controls the working condition of the auto adjusting system for gas and/or electrical/electromagnetic and/or other heating system, the auto feeding system, the auto turnover system for cooked materials, the auto taking-out system for cooked materials, and other systems. The whole cooking process, from igniting and feeding materials to finishing cooking and taking-out finished product, is performed automatically. Because this automatic cooking machine can automatically and correctly control the cooking duration and degree of cooking, and can perform many cooking techniques, especially those Chinese cooking techniques, this automatic cooking machine can not only automatically cook but also make high and stable quality dishes and other foods with various special flavors.

When the cooking method of the present invention is used in a semi-automatic cooking machine or is used to perform semi-automatic cooking in an automatic cooking machine, some actions can be carried out manually, and the control system shall not directly control these actions but cooperate with an operator to complete a cooking process by prompting or other ways according to the cooking program, the measured data about the initial state and the heating duration, time, and/or other data.

The present invention will be explained in details with specific embodiments and accompanying drawings.

### Brief Description of the Drawings

Fig. 1 is a schematic front view of an automatic cooking machine which can be used to perform the cooking method of the present invention.
Fig. 2 is a schematic front view of another automatic cooking machine which can be used to perform the cooking method of the present invention.
Fig. 3 is a flow chart of a specific cooking method of the present invention (Taking stir-frying pakchoi as an example).
Fig. 4 is a schematic cutaway view of an auto adjusting system for gas flux which can be used to perform the cooking method of the present invention.
Fig. 5 is a schematic side view of a package of cooking-materials which can be used to perform the cooking method of the present invention.
Fig. 6 is a top view of Fig. 5.
Fig. 7 is a schematic side view of an auto feeding system which can be used to perform the cooking method of the present invention.
Fig. 8 is a front view of Fig. 7.
Fig. 9 is a schematic view of an auto turnover/taking-out system with a flexible structure which can be used to perform the cooking method of the present invention.

### Modes of Embodiments

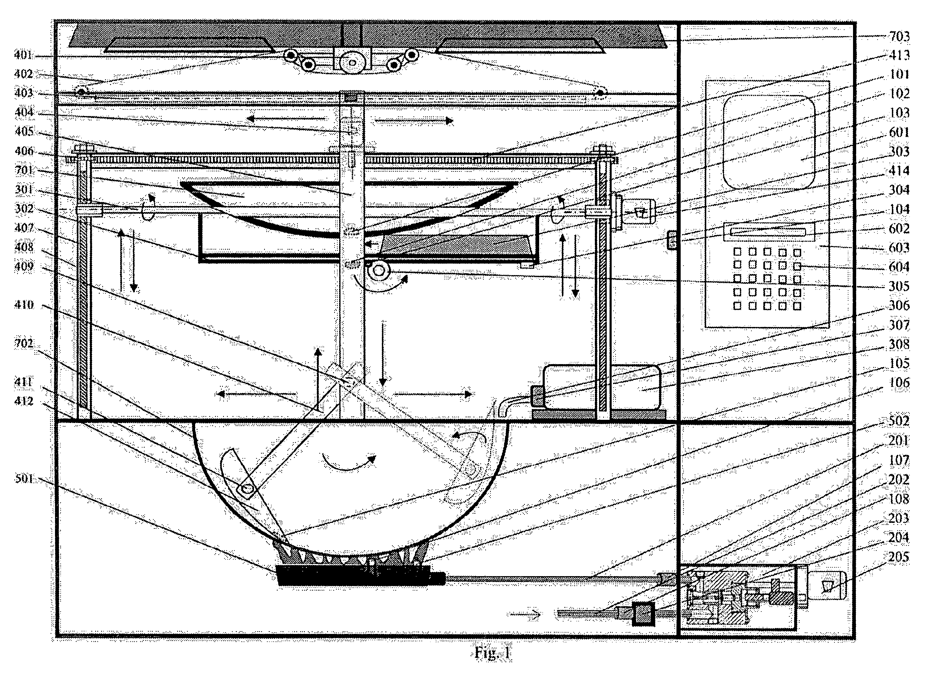

Fig. 1 shows a device which can be used to perform the cooking method of the present invention. The device comprises a pan, a sensor system, an auto adjusting system for gas heating or electrical/electromagnetic heating, an auto feeding system, an auto turnover/taking-out system, and a computer system or other control system.

In Fig. 1, sensors 102 and 101 are non-contacting sensors. Sensor 102 is installed on the support of the auto feeding system and sensor 101 is installed on the pan cover. They separately detect the temperature and other parameters of cooking-materials in the pan when the pan cover is closed or open and provide the computer system with feedback data. Sensor 105 is a contacting sensor which is installed on the edge of the scoop of the turnover/taking-out system to detect the temperature and other parameters of the cooking-materials in the pan and also provides the computer system with feedback data. Sensor 107 provides the computer system with feedback data on gas flux and pressure. Sensor 106 provides the computer system with feedback data on flame temperature and monitors the burning or extinguishing state of flame. Sensor 103 is installed on the outlet of the auto feeding system to provide the computer system with feed-forward data such as the initial temperature of cooking-materials. Sensor 104 provides the computer system with feed-forward data such as the environmental temperature. Sensor 108 provides the computer system with feed-forward data such as the flux and pressure of gas source. Of course, other types of sensors and sensor configuration can be used at the present invention for the accurate measurement of the cooking duration of cooking-materials.

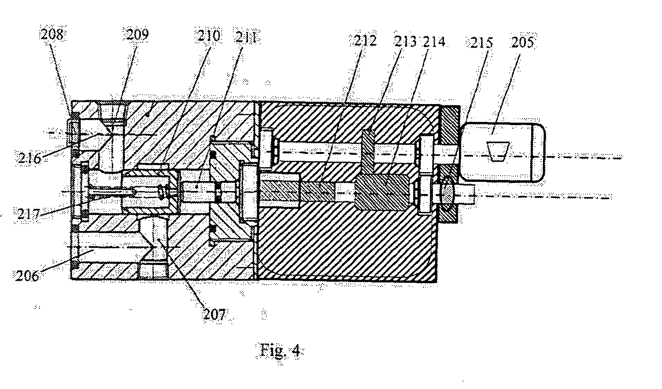

Fig. 4 shows an auto adjusting system for controlling gas flux which can be used to perform the cooking method of the present invention. The gas flows into the system via inlet 206, passing through channel 207, a throttling gap on valve core 210 and channel 209, and flows out of the system via outlet 216. The motor 205 drives shaft 212 to spin in or out by gears 213 and 214, pushing valve core 210 in axial direction via pushing-rod 211 to change the flux area section and thus to adjust the gas flux. Pushed by spring 217, valve core 210 always abuts against pushing-rod 211. Sensor 215 detects linear displacement and angular displacement of shaft 212, and sensor 208 detects the gas flux of the outlet to provide the computer system with feedback data to precisely control the gas flux.

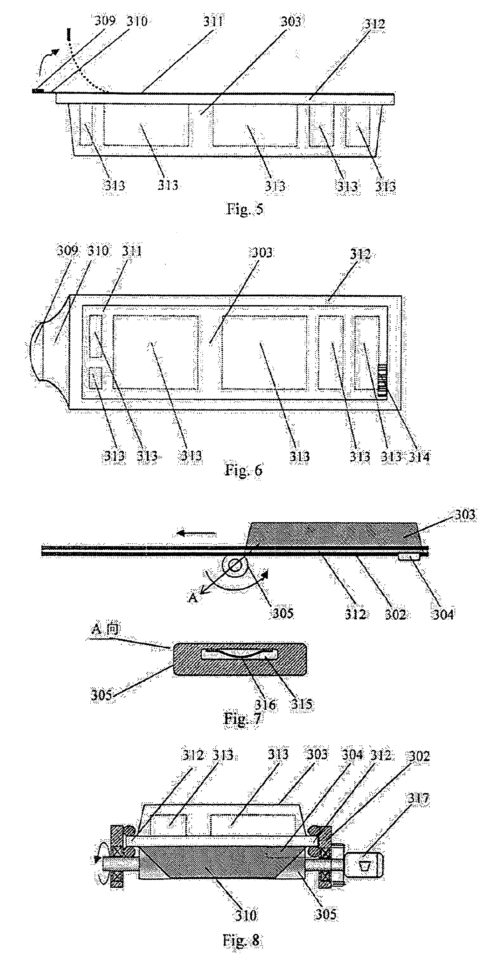

Fig. 5 and Fig. 6 show a package of cooking-materials which can be used to perform the cooking method of the present invention. Raw materials, supplementary or auxiliary materials and semi-finished products are packed in different cells 313 of plastic case 303 according to the feeding sequence when they are put into the pan. The upper part of plastic case 303 is sealed by plastic film 311 through hot pressing. There is a extending tongue 310 on the front part of the hot pressed plastic film 311, on which there is a protrusion 309 in form of band. Figs. 6 and 7 show the auto feeding system matched with this kind of package. When using, put the protrusion 312 formed on the edge of the plastic case into groove 302, enabling it to slide along the groove. Insert the tongue 310 into slot 315 in shaft 305 and make spring 316 clip protrusion 309. Code bar scanner 304 automatically scans the identification bar 314 and provides the recognition information with the computer system. The computer system loads and executes the corresponding cooking program (software) from its memory or from Network. When the feeding system is operated, motor 317 controlled by the computer system drives rotating-shaft 305 to rotate and thus to separate hot pressed film 311 from the body of plastic case 303. The body of the case slides forward and the cooking-materials contained in the case drops into the pan under the case. The computer system controls rotating-shaft 305 to stop at proper position and the separation between hot pressed plastic film 311 and case 303 stops at the edge of cells 313, which enables only the needed material to drop into the pan at proper moment. Of course, sensors used to detect linear displacement and angular displacement can be installed to help the computer system for exact control.

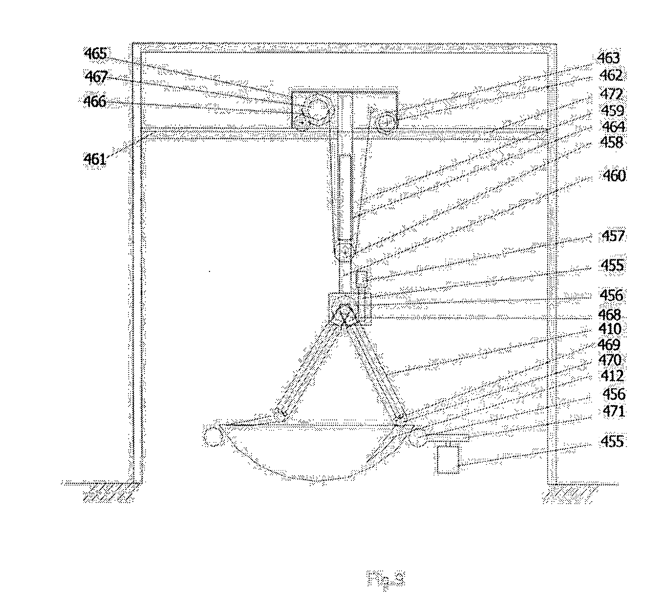

Fig. 9 shows a turnover/tasking-out system with a flexible structure which can be used to perform the cooking method of the present invention. Motor 468 drives scoop 412 to rotate around a rotating-shaft of linker 410 through tapering gears 469 and 470. Motor 457 drives linker 410, together with scoop 412, to rotate around a shaft on inner sleeve 460. Motor 466 drives reel wheel 467 to reel or release sling rope 459 and thus drives pulley 458 on inner sleeve 460 to move vertically; linker 410 and scoop 412, together with inner sleeve 460, move vertically along outer sleeve 464. Motor 463 drives gear 462 on hanger 465 to rotate and thus drives hanger 465, together with the inner and outer sleeves, the linker and the scoop, to move along the guide rail 461. The combination of the above movements can realize the turnover action and the taking-out action for the cooked materials. If the scoop interferes with the pan, this turnover/taking-out system with a flexible structure will rise wholly and freely to avoid the damage caused by collision between the pan and the scoop and can adapt the scoop to pans with different curved surfaces. Motor 455 drives pan 702 to rotate through gears 471 and 456 and thus change the scooping position with a better effect.

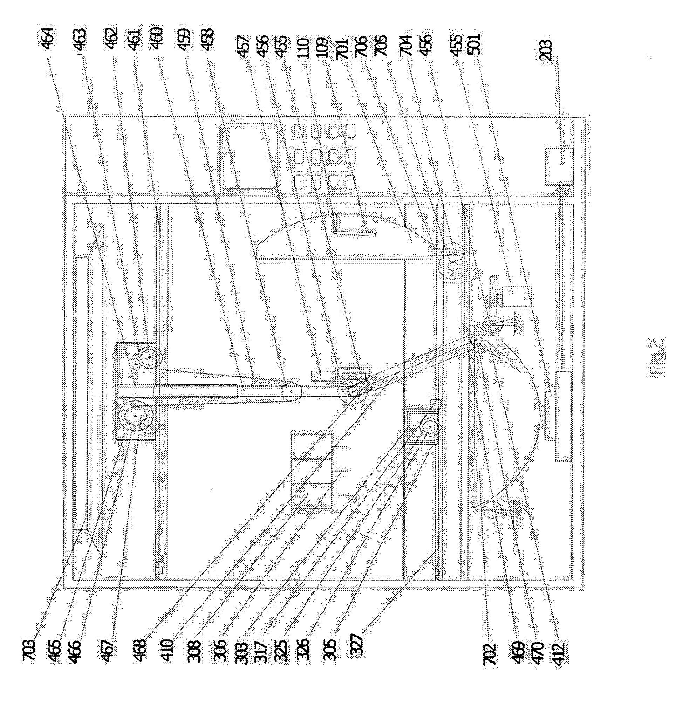

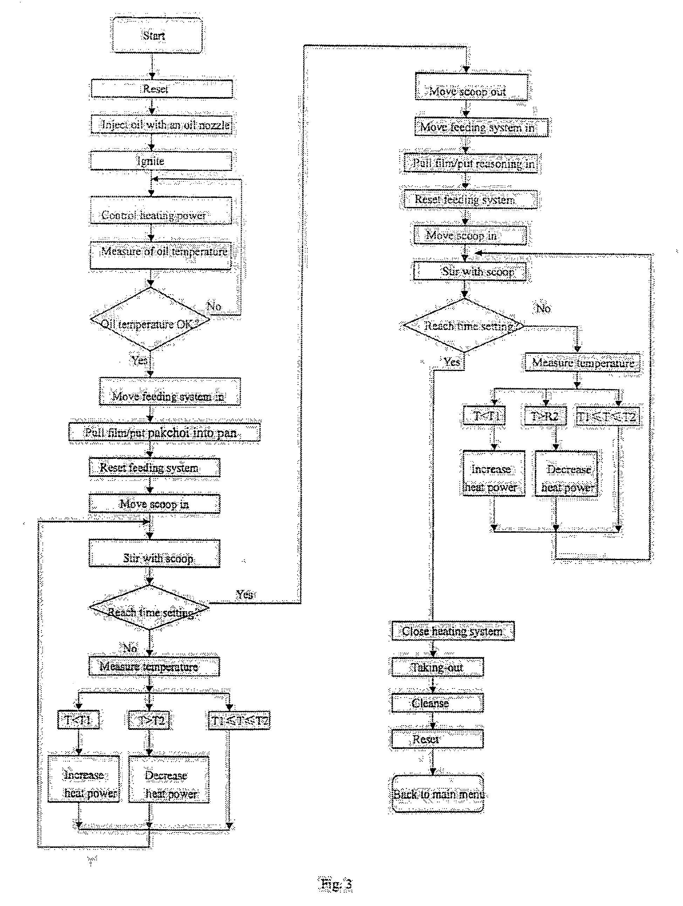

Following is an explanation of the cooking method of the present invention referring to the specific flow chart shown in Fig. 3 with the combination of the device shown in Fig. 1 and Fig. 2.

Please refer to Fig. 1. When performing the cooking method of the present invention with the automatic cooking machine shown in Fig. 1, insert the package 303 of cooking-materials which can be bought in the market into sliding groove 302, with hot pressed film 311 facing downwards. Insert the tongue to the slot on rotating-shaft 305. Bar code scanner304 scans identification bar 314 on the package 303 of cooking-materials and acquires the information for the control system. The control system loads and executes the corresponding cooking program (software) from its memory or network. When cooking begins, the control system issues a command to open electromagnetic valve 204, letting gas flow into auto adjusting system 203 through inlet pipe 202 and electromagnetic valve 204. The control system controls the gas flux through controlling the rotation of motor 205 according to the feed-forward data provides by sensors 104 and 108. The gas flows into burning base 501 from outlet pipe 201 and the auto lighter ignites the gas. Then the control system controls the gas flux and the working state of various other systems according to the feed-forward data provided by sensors 103,104 and 108, and the feedback data provided by sensors 101, 102, 105, 106 and 107. When feeding the cooking-materials, a motor drives rotating-shaft 305 to rotate and rolls hot pressed film 311 to separate from packing case 303, the cooking-materials drops into the pan 702 from the torn gap. The insulated container 308, which can be heated, has three cells storing oil, soup and water respectively. A tri-path electromagnetic valve 307 controls individually the switches of the oil cell, the soup cell and the water cell. Oil, water and soup can be separately injected into the pan through a tee pipeline 306. Groove 302 and pan cover 701 is installed on rotating-shaft 301. As shown in the figure, in process of feeding, the auto feeding system is at the lower position below the pan cover. When covering the pan, motor 414 drives rotating-shaft 301 to rotate and thus drives the pan cover to turn down. Motor 404 drives rotating-shaft 301 to move down along support 408 through chain 413, gear 406 and guide screw 407, sending the auto feeding system to the most proper feeding position or covering the pan cover. When the feeding process is finished or the cover needs to be opened, rotating-shaft 301 moves upward to make working space for the turnover/taking-out system. Scoop 412, controlled by the control system as above, performs the turnover action and the taking-out action under the requirements of cooking techniques through combined movements of rotating around rotating-shaft 411, rotating around rotating-shaft 409 together with linker 410 and moving along support 405 vertically. If the turnover/taking-out system is needed to move into or out of the pan, motor 401 will drive support 405 to move along sliding guide rail 403. 603 is the panel of the control system. 602 is a CD diver, 604 is a keyboard, 601 is a display, and 703 is a smoke exhauster.

Please refer to Fig. 2. In the figure, 203 is an auto adjusting system for gas heating, 501 is gas burning base, and 703 is a smoke exhauster. The dentations on feeding reel 305 are inserted into the holes on sealing film 311 on packing case 303. Motor 317 drives rotating-shaft 305 to rotate, rolling and pulling hot pressed film and thus separating it from packing case 303, with the cooking-materials dropping into the pan 702 from the torn gap. Motor 325 drives gear 326 to rotate, driving the auto feeding system together with packing case 303 to move along guide rail 327, and thus sending the auto feeding system to the most proper position for feeding. The insulated container 308 has three cells storing oil, soup and water respectively. Oil, water and soup can separately be injected into the pan through tee pipeline 306. Motor 468 drives scoop 412 to rotate around the rotating-shaft on linker 410 through tapering gears 469 and 470. Motor 457 drives a shaft to rotate around inner sleeve 460 through worm wheel 456 and worm 470. Motor 466 drives reel wheel 467 to roll and release steel rope 459 and thus to drive pulley 458 on inner sleeve 460 to move vertically. Motor 463 drives gear 462 on hanger 465 to rotate, having hanger 465, together with the inner and outer sleeves, the linker and the scoop ,to move along guide rail 461. The turnover action and the taking-out action can be performed under the requirements of cooking techniques through combined movements. Motor 455 drives pan 702 to rotate through gear 456, changing the scooping position. Motor 706 drives pan cover 701 to rotate to be opened or closed through gears 705 and 704. The pan cover can be moved besides the pan along the guide rail. Sensor 109 is installed on flexible joint 110 and moves to the detecting position automatically when the pan cover is closed.

## Claims

1. An intelligent cooking method performed in a cooking machine, which includes the following steps:
(1) Providing and/or inputting data about cooking-material and/or about a cooking process itself, wherein said data about cooking-material and/or about a cooking process it self is input in step (1) through reading an identification information (314) on a package (303) of cooking-material;
(2) Loading a corresponding cooking program according to the data provided and/or input in step (1);
(3) Executing said cooking program loaded in step (2);
(4) Opening the package (303) containing said cooking-material and feeding said cooking-material into a pan (702) and/or a container of said cooking machine according to the instruction obtained after executing of said cooking program; and
(5) Controlling automatically the heating intensity and speed for increasing or decreasing the temperature by adjusting the heating power or the combustion intensity of said cooking machine according to the data set by said cooking program and/or according to the data measured for the initial state and/or according to the data of cooking duration measured in real-time.

2. The cooking method according to claim 1, wherein said data about cooking-material and/or other required information data are input by a cooking operator in step (1).

3. The cooking method according to claim 1, wherein said cooking program is loaded in step (2) through reading from a memory medium or through downloading from a network.

4. The cooking method according to claim 1, wherein said cooking-material is feed into said pan (720) and/or said container in step (4) through cutting said package (303) of cooking-material or through relative motion between the sealing part and the packing part of said package of cooking-material.

5. The cooking method according to claim 1, wherein in step (5) one or more sensors (101; 102) provided in a cooking system are used to measure and collect data about the surroundings of cooking, the heat sources, the cooking machine and/or its containers, the selected heat transfer medium, the initial state of said cooking-material, and/or the real-time state of heating duration.

6. The cooking method according to claim 1, wherein the heating intensity is automatically controlled in step (5) by continuous adjustment or step-wise adjustment of the heating power or the combustion intensity.

7. The cooking method according to claim 1, wherein the heating intensity is automatically controlled in step (5) through feeding back said data measured for the initial state and/or said data of cooking duration measured in real-time to the control system of said cooking machine and comparing them with the setting data provided by said cooking program which is loaded in step (2).

8. The cooking method according to claim 1, wherein said cooking method further includes step of turnover, taking-out and/or re-feeding of said cooking-material.

9. The cooking method according to claim 1, wherein said cooking-material is feed in one times or in several times in step (4).

## Patentansprüche

1. Intelligentes, in einer Garvorrichtung durchgeführtes Garverfahren mit den folgenden Schritten:
(1) Bereitstellen und/oder Eingeben von Daten über Garmaterial und/oder über ein Garverfahren selbst, wobei die Daten über Garmaterial und/oder über ein Garverfahren selbst in Schritt (1) durch Lesen einer Identifizierungsinformation (314) auf einer Verpackung (303) von Garmaterial eingegeben werden,
(2) Laden eines entsprechenden Garprogramms gemäß den in Schritt (1) bereitgestellten und/oder eingegebenen Daten,
(3) Abarbeiten des in Schritt (2) geladenen Garprogramms,
(4) Öffnen der das Garmaterial enthaltenden Verpackung (303) und Zuführen des Garmaterials in einen Topf (702) und/oder einen Behälter der Garvorrichtung gemäß der nach der Abarbeitung des Garprogramms erhaltenen Anweisung und
(5) automatisches Steuern der Intensität des Erhitzens und der Geschwindigkeit der Erhöhung oder Senkung der Temperatur durch Verstellen der Heizleistung oder der Verbrennungsintensität der Garvorrichtung gemäß den vom Garprogramm eingestellten Daten und/oder gemäß den für den Ausgangszustand gemessenen Daten und/oder gemäß den in Echtzeit gemessenen Gardauerdaten.

2. Garverfahren nach Anspruch 1, wobei die Daten über Garmaterial und/oder andere erforderliche Informationen durch eine Garbetriebsperson in Schritt (1) eingegeben werden.

3. Garverfahren nach Anspruch 1, wobei das Garprogramm in Schritt (2) durch Lesen von einem Speichermedium oder durch Herunterladen von einem Netzwerk geladen wird.

4. Garverfahren nach Anspruch 1, wobei das Garmaterial dem Topf (720) und/oder dem Behälter in Schritt (4) zugeführt wird, indem die Garmaterialverpackung (303) durchgeschnitten wird oder durch eine Relativbewegung zwischen dem Versiegelungsteil und dem Packungsteil der Garmaterialverpackung.

5. Garverfahren nach Anspruch 1, wobei in Schritt (5) ein oder mehrere in einem Garsystem vorgesehene Sensoren (101; 102) zum Messen und Sammeln von Daten über die Garumgebung, die Wärmequellen, die Garvorrichtung und/oder ihre Behälter, das gewählte Wärmeübertragungsmedium, den Ausgangszustand des Garmaterials und/oder den Echtzeitzustand der Erhitzungsdauer verwendet werden.

6. Garverfahren nach Anspruch 1, wobei die Erhitzungsintensität in Schritt (5) durch kontinuierliches Verstellen oder schrittweises Verstellen der Heizleistung oder der Verbrennungsintensität automatisch gesteuert wird.

7. Garverfahren nach Anspruch 1, wobei die Erhitzungsintensität in Schritt (5) automatisch gesteuert wird, indem die für den Ausgangszustand gemessenen Daten und/oder die in Echtzeit gemessenen Gardauerdaten an das Steuersystem der Garvorrichtung rückgekoppelt und mit den durch das in Schritt (2) geladene Garprogramm bereitgestellten Einstelldaten verglichen werden.

8. Garverfahren nach Anspruch 1, wobei das Garverfahren ferner einen Schritt des Wendens, Herausnehmens und/oder erneuten Zuführens von Garmaterial aufweist.

9. Garverfahren nach Anspruch 1, wobei das Garmaterial in Schritt (4) einmal oder mehrere Male zugeführt wird.

## Revendications

1. Procédé de cuisson intelligent effectué dans une machine de cuisson, qui comprend les étapes suivantes :
(1) fournir et/ou saisir des données sur la matière à cuire et/ou sur un processus de cuisson lui-même, lesdites données sur la matière à cuire et/ou sur un processus de cuisson lui-même étant saisies lors de l'étape (1) par la lecture d'une information d'identification (314) sur un emballage (303) de matière à cuire ;
(2) charger un programme de cuisson correspondant selon les données fournies et/ou saisies lors de l'étape (1) ;
(3) exécuter ledit programme de cuisson chargé lors de l'étape (2) ;
(4) ouvrir l'emballage (303) contenant ladite matière à cuire et alimenter ladite matière à cuire dans une cuvette (702) et/ou un récipient de ladite machine de cuisson selon l'instruction obtenue après avoir exécuté ledit programme de cuisson ; et
(5) contrôler automatiquement l'intensité et la vitesse de chauffage pour augmenter ou diminuer la température en réglant la puissance de chauffage ou l'intensité de combustion de ladite machine de chauffage conformément aux données définies par ledit programme de cuisson et/ou conformément aux données mesurées pour l'état initial et/ou conformément aux données de la durée de cuisson mesurées en temps réel.

2. Procédé de cuisson selon la revendication 1, dans lequel lesdites données sur la matière à cuire et/ou les autres données d'information requises sont saisies par un opérateur de cuisson lors de l'étape (1).

3. Procédé de cuisson selon la revendication 1, dans lequel ledit programme de cuisson est chargé lors de l'étape (2) par la lecture sur un support de mémoire ou par téléchargement d'un réseau.

4. Procédé de cuisson selon la revendication 1, dans lequel ladite matière à cuire est alimentée dans ladite cuvette (720) et/ou ledit récipient lors de l'étape (4) par la coupure dudit emballage (303) de ladite matière à cuire ou par un mouvement relatif entre la partie de scellage et la partie d'emballage dudit emballage de la matière à cuire.

5. Procédé de cuisson selon la revendication 1, dans lequel, lors de l'étape (5), un ou plusieurs capteurs (101 ; 102) prévus dans un système de cuisson sont utilisés pour mesurer et recueillir des données sur l'environnement de cuisson, les sources de chaleur, la machine de cuisson et/ou ses récipients, le milieu de transfert de chaleur sélectionné, l'état initial de ladite matière à cuire, et/ou l'état en temps réel de la durée de cuisson.

6. Procédé de cuisson selon la revendication 1, dans lequel l'intensité de chauffage est contrôlée automatiquement lors de l'étape (5) par réglage continu ou par réglage pas à pas de la puissance de chauffage ou de l'intensité de combustion.

7. Procédé de cuisson selon la revendication 1, dans lequel l'intensité de chauffage est contrôlée automatiquement lors de l'étape (5) en réintroduisant lesdites données mesurées pour l'état initial et/ou lesdites données de durée de cuisson mesurées en temps réel dans le système de commande de ladite machine de cuisson et en les comparant avec les données de réglage fournies par ledit programme de cuisson qui est chargé lors de l'étape (2).

8. Procédé de cuisson selon la revendication 1, dans lequel ledit procédé de cuisson comprend en outre l'étape de retournement, d'enlèvement et/ou de réalimentation de ladite matière à cuire.

9. Procédé de cuisson selon la revendication 1, dans lequel ladite matière à cuire est alimentée [MCLF1] en une fois ou en plusieurs fois lors de l'étape (4).
